# EUROPEAN PATENT APPLICATION

(11) **EP 4 380 204 A1**
(43) Date of publication of application: **05.06.2024**
(21) Application number: 23213068.2
(22) Date of filing: 29.11.2023
(51) Int. Cl.: H04W 4/80, H04W 76/14, H04W 84/12, H04W 92/18

(54) **COMMUNICATION METHODS, APPARATUSES, AN ACCESS POINT, STATIONS, AND COMPUTER READABLE MEDIUM**

(30) Priority: 29.11.2022 CN 202211515738
(71) Applicant: Nokia Solutions and Networks Oy, 02610 Espoo (FI)
(72) Inventor: XU, Wenyi, Shanghai, 200001 (CN); LIU, Jian Guo, Shanghai (CN); YANG, Zhi Jie, Shanghai, 201399 (CN); MENG, Yan, Shanghai, 200000 (CN); TAO, Tao, Shanghai, 200432 (CN); WANG, Wen Jian, Shanghai, 201206 (CN); YE, Chen Hui, Shanghai, 200030 (CN); MUTGAN, Orhan Okan, Shanghai (CN); KASSLIN, Mika, 02770 Espoo (FI)
(74) Representative: DREISS Patentanwälte PartG mbB

(57) **Abstract**

Examples of the disclosure relate to communication methods and apparatuses, an access point, stations and a computer readable medium. An embodiment of the method comprises: determining, at an access point and based on determining that a direct link between stations based sensing procedure is triggered, a first station and a second station associated with the sensing procedure; and transmitting, to at least one of the first station and the second station, a sensing performing request for performing the sensing procedure. In this way, target sensing between non-access-point stations is achieved, such that sensing coverage is extended and a sensing effect is improved.

## Description

### FIELD

The disclosure relates to the field of communications and in particular, to a communication methods and apparatuses, an access point, stations and a computer readable medium.

### BACKGROUND

Wireless local area network (WLAN) sensing is a service that enables a STA (e.g., an AP) to obtain sensing measurements of the channel(s) between two or more STAs and/or the channel between a receive antenna and a transmit antenna of a STA. WLAN sensing makes use of received WLAN signals to detect features of an intended target in a given environment. The technology can measure range, velocity, and angular information; detect motion, presence, or proximity, detect objects, people, and animals, and be used in rooms, houses, cars, and enterprise environments.

### SUMMARY

In general, example embodiments of the present disclosure relate to a technical solution based on sensing.

In a first aspect, there is provided an access point. The access point comprises: at least one processor; and at least one memory storing instructions, the instructions when executed by the at least one processor causing the access point at least to: determine, based on determining that a direct link between stations based sensing procedure is triggered, a first station and a second station associated with the sensing procedure; and transmit, to at least one of the first station and the second station, a sensing performing request for performing the sensing procedure.

In a second aspect, there is provided a first station. The first station comprises: at least one processor; and at least one memory storing instructions, the instructions when executed by the at least one processor causing the first station at least to: receive, from an access point, a sensing performing request for performing a direct link-based sensing procedure, the direct link being between the first station and a second station; and perform the sensing procedure based on received sensing performing request.

In a third aspect, there is provided a second station. The second station comprises: at least one processor; and at least one memory storing instructions, the instructions when executed by the at least one processor causing the second station at least to: receive, from an access point or a first station, a sensing performing request for performing a direct link-based sensing procedure, the direct link being between the first station and the second station; and perform, based on received sensing performing request, the sensing procedure.

In a fourth aspect, there is provided a communication method. The communication method comprises: determining, at an access point and based on determining that a direct link between stations based sensing procedure is triggered, a first station and a second station associated with the sensing procedure; and transmitting, to at least one of the first station and the second station, a sensing performing request for performing the sensing procedure.

In a fifth aspect, there is provided a communication method. The communication method comprises: receiving, at a first station and from an access point, a sensing performing request for performing a direct link-based sensing procedure, the direct link being between the first station and a second station; and performing the sensing procedure based on received sensing performing request.

In a sixth aspect, there is provided a communication method. The communication method comprises: receiving, at a second station and from an access point or a first station, a sensing performing request for performing a direct link-based sensing procedure, the direct link being between the first station and the second station; and performing the sensing procedure based on received sensing performing request.

In a seventh aspect, there is provided a communication apparatus. The communication apparatus comprises: means for determining, at an access point and based on determining that a direct link between stations based sensing procedure is triggered, a first station and a second station associated with the sensing procedure; and means for transmitting, to at least one of the first station and the second station, a sensing performing request for performing the sensing procedure.

In an eighth aspect, there is provided a communication apparatus. The communication apparatus comprises: means for receiving, at a first station and from an access point, a sensing performing request for performing a direct link-based sensing procedure, the direct link being between the first station and a second station; and means for performing the sensing procedure based on received sensing performing request.

In a ninth aspect, there is provided a communication apparatus. The communication apparatus comprises: means for receiving, at a second station and from an access point or a first station, a sensing performing request for performing a direct link-based sensing procedure, the direct link being between the first station and the second station; and means for performing the sensing procedure based on received sensing performing request.

A tenth aspect, there is provided a non-transitory computer readable medium comprising program instructions for causing an apparatus to perform at least the method according to any one of the above fourth to sixth aspects.

In an eleventh aspect, there is provided a non-transitory computer readable medium comprising program instructions stored thereon, and the program instructions execute at least the method according to any one of the above fourth to sixth aspects.

In a twelfth aspect, there is provided a computer program comprising instructions, which, when executed by an apparatus, cause the apparatus at least to: determine, at an access point and based on determining that a direct link between stations based sensing procedure is triggered, a first station and a second station associated with the sensing procedure; and transmit, to at least one of the first station and the second station, a sensing performing request for performing the sensing procedure.

In a thirteenth aspect, there is provided a computer program comprising instructions, which, when executed by an apparatus, cause the apparatus at least to: receive, at a first station and from an access point, a sensing performing request for performing a direct link-based sensing procedure, the direct link being between the first station and a second station; and perform the sensing procedure based on received sensing performing request.

In a fourteenth aspect, there is provided a computer program comprising instructions, which, when executed by an apparatus, cause the apparatus at least to: receive, at a second station and from an access point or a first station, a sensing performing request for performing a direct link-based sensing procedure, the direct link being between the first station and the second station; and perform, based on received sensing performing request, the sensing procedure.

In a fifteenth aspect, there is provided an access point. The access point comprises: determining circuitry configured to determine, at an access point and based on determining that a direct link between stations based sensing procedure is triggered, a first station and a second station associated with the sensing procedure; and transmitting circuitry configured to transmit, to at least one of the first station and the second station, a sensing performing request for performing the sensing procedure.

In a sixteenth aspect, there is provided a first station. The first station comprises receiving circuitry configured to receive, from an access point, a sensing performing request for performing a direct link-based sensing procedure, the direct link being between the first station and a second station; and performing circuitry configured to perform the sensing procedure based on received sensing performing request.

In a seventeenth aspect, there is provided a second station. The second station comprises receiving circuitry configured to receive, at a second station and from an access point or a first station, a sensing performing request for performing a direct link-based sensing procedure, the direct link being between the first station and the second station; and performing circuitry configured to perform, based on received sensing performing request, the sensing procedure.

It is to be understood that the summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

FIG. 1A illustrates an example communication system in which embodiments of the present disclosure may be implemented.
FIG. 1B illustrates a schematic diagram of a residence in which one access point (AP) has a plurality of stations (STAs) according to some embodiments of the disclosure.
FIG. 1C illustrates a schematic diagram of a residence in which sensing is performed among a plurality of STAs according to some embodiments of the disclosure.
FIG. 2 illustrates a schematic diagram of a sensing process according to some embodiments of the disclosure.
FIG. 3 illustrates a schematic diagram of a sensing process according to some other embodiments of the disclosure.
FIG. 4 illustrates a schematic diagram of environment setup with a plurality of STAs according to some embodiments of the disclosure.
FIG. 5 illustrates a schematic diagram of a signaling format according to some embodiments of the disclosure.
FIG. 6 illustrates a schematic diagram of a process performed by an access point according to some embodiments of the disclosure.
FIG. 7 illustrates a schematic diagram of a process performed by a first station according to some embodiments of the disclosure.
FIG. 8 illustrates a schematic diagram of a process performed by a second station according to some embodiments of the disclosure.
FIG. 9 illustrates a simplified block diagram of an electronic device suitable for implementing embodiments of the present disclosure.
FIG. 10 illustrates a schematic diagram of a computer-readable medium suitable for implementing embodiments of the present disclosure.

Throughout the drawings, the same or similar reference numerals represent the same or similar element.

### DETAILED DESCRIPTION OF EMBODIMENTS

The principles and spirit of the disclosure will be described below with reference to several illustrative embodiments shown in accompanying drawings. It should be understood that the specific embodiments are described only to enable those skilled in the art to better understand and implement the present disclosure, and are not intended to limit the scope of the present disclosure in any way.

The terms "include" and "comprise" used herein and similar terms should be understood as open inclusion, that is, "including but not limited to" and "comprising but not limited to". The term "based on" should be understood as "at least partly based on." The terms "an embodiment" or "the embodiment" should be understood as "at least one embodiment." The terms "first", "second", etc. may refer to different or the same objects. Other explicit and implicit definitions may be included below.

As used herein, the term "determine" covers a wide variety of actions. For example, "determine" may comprise operating, computing, processing, exporting, inquiry, looking up (for example, looking up in a table, a database, or another data structure), finding, etc. In addition, "determine" may comprise receiving (for example, receiving information), accessing (for example, accessing data in a memory), etc. In addition, "determine" may comprise parsing, choosing, selecting, establishing, etc.

As used in this application, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as an OLT or other computing devices, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit or a similar integrated circuit in the OLT or other computing devices.

In ongoing 802.11 standardization (institute of electrical and electronics engineers (IEEE) 802.11-18/0611r16), a number of use cases related to Wi-Fi sensing are defined, such as different range of gesture recognitions, from small range (finger movement), medium range (hand movement) to large range (body movement), besides, user identification and presence are also concerned scenarios.

In a case of IEEE 802.11bf for radio-frequency (RF) sensing, an IEEE 802.11bf project is intended to carry out sensing (a special example of RF sensing) by means of a Wi-Fi signal [IEEE 802.11-19/2103r11, in IEEE 802.11 BF/d 0.1]. In addition to other functions, IEEE 802. 11bf can enable each station (called STA for short) to inform other stations of their wireless local area network (WLAN) sensing capabilities, and to request and set up transmission allowing WLAN sensing measurement to be performed. A WLAN sensing procedure allows the STA to perform WLAN sensing. The WLAN sensing is a service that enables a STA (e.g., an AP) to obtain sensing measurements of the channel(s) between two or more STAs and/or the channel between a receive antenna and a transmit antenna of a STA. WLAN sensing makes use of received WLAN signals to detect features of an intended target in a given environment. The technology can measure range, velocity, and angular information; detect motion, presence, or proximity; detect objects, people, and animals; and be used in rooms, houses, cars, and enterprise environments. The targeted frequency bands are between 1 GHz and 7.125 GHz and above 45 GHz. Thus, a basic WLAN sensing procedure was agreed in a meeting [IEEE 802.11-21/0504rl], which allows STAs (such as access-point (AP) and non-AP STAs) to perform WLAN sensing and obtain measurement results. Therein, a sensing session is an example of a sensing procedure with associated operational parameters of the instance.

For a sensing session, the following sensing roles will be involved: a sensing initiator, which is an STA initiating the WLAN sensing session; a sensing responder, which is an STA participating in the WLAN sensing session initiated by the sensing initiator; a sensing transmitter, which is an STA transmitting presentation protocol data units (PPDUs) for sensing measurement in the sensing session; and a sensing receiver, which is an STA receiving the PPDUs transmitted by the sensing transmitter and performing the sensing measurement in the sensing session.

An STA serving as a sensing initiator may serve as a sensing transmitter, a sensing receiver, both a sensing transmitter and a sensing receiver, or neither a sensing transmitter nor a sensing receiver to participate in a sensing measurement instance. An STA serving as a sensing responder may serve as a sensing transmitter, a sensing receiver, or both a sensing transmitter and a sensing receiver to participate in a sensing measurement instance. A wireless local area network sensing procedure in some solutions may be composed of one or more of the following: sensing session setup, sensing measurement setup, sensing measurement instances, sensing measurement setup termination, and a sensing session termination. The wireless local area network sensing procedure may be comprised of a plurality of sensing measurement instances. While an AP and STA A still have the first sensing session active, a new sensing session setup procedure is performed between the AP and STA B to set up a sensing session identified by a user identification (UID) of STA B. In a currently proposed sensing session setting, a sensing procedure is performed between an AP and an STA. It means that the AP is required to serve as a sensing transmitter or a sensing responder to participate in an entire process of sensing.

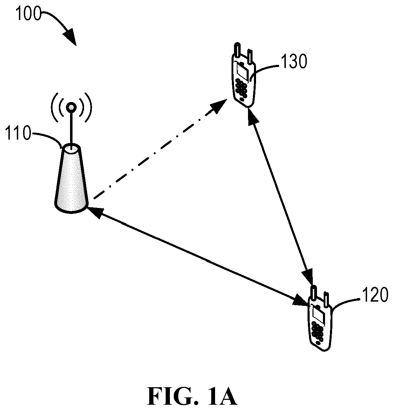

FIG. 1A illustrates a block diagram of an example communication system in which an embodiment of the disclosure can be implemented. As shown in FIG. 1A, the communication system 100 comprises an access point 110 and stations 120 and 130. Specifically, the two stations 120 and 130 that may set up a direct link are taken as an example, and may be referred to as a first station 120 and a second station 130. It should be noted that a number of the stations 120 and 130 and a number of the access point 110 in an embodiments of the disclosure are not limited to the above instances. The stations 120 and 130 may be in communication with the access point 110 such that sensing can be carried out on a sensing target in an environment. For example, the access point 110 may be in communication with the first station 120 such that the above sensing can be carried out. The access point 110 may be in line-of-sight communication with the first station 120. The first station 120 may set up a direct link, such as a tunneled direct link setup (TDLS) link, with the second station 130 for communication.

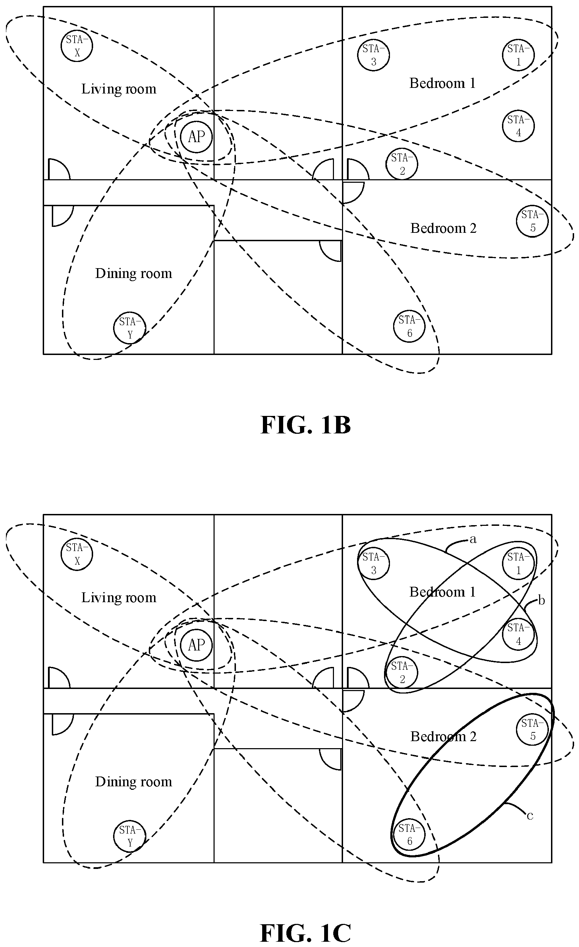

In some places such as a residential environment, as shown in FIG. 1B, one AP is deployed in a living room. STA-1 to STA-4 are deployed in bedroom 1. STA-5 and STA-6 are deployed in bedroom 2. STA-X and STA-Y are deployed in the living room and a dining room respectively. All the STAs set up wireless connections with the AP. Since electromagnetic waves are blocked by walls (as shown in bedroom 1 or bedroom 2), the AP and STAs have limited coverage in the room (as shown in bedroom 2). Moreover, the AP has difficulty in detecting movement (such as walking in bedroom 1) and a posture (such as falling from a bed to a floor in bedroom 2) of a human being in such an environment. Since a plurality of STAs may be placed in a specific room (such as bedroom 1 or bedroom 2), sensing areas of adjacent STAs can have better coverage than that of AP-STAs and are configured for sensing. As shown in FIG. 1C (in which coverage marked by a, b and c is ellipse), each STA in any one of a, b and c is an STA in the same room. However, such a common scenario in reality is not supported by sensing measurement. Therefore, the embodiments of the disclosure provide an AP assisted TDLS-sensing session setup mechanism for non-AP STAs. Sensing coverage is extended and a sensing result is improved through WiFi sensing based on the non-AP STA.

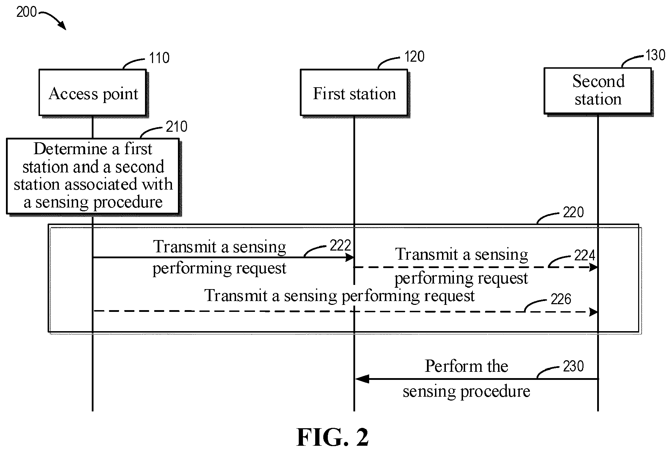

FIG. 2 illustrates a schematic diagram of a sensing process according to some embodiments of the disclosure. As shown in FIG. 2, in a process 200, the access point 110 determines (210), based on determining that a direct link between stations based sensing procedure is triggered, a first station 120 and a second station 130 associated with the sensing procedure. The access point 110 transmits (220), to at least one of the first station 120 and the second station 130, a sensing performing request for performing the sensing procedure. There may be specifically two ways of implementation in step 220. Specifically, in some embodiments, the access point 110 transmits (222) the sensing performing request only to the first station 120. The first station 120 transmits (224) the sensing performing request to the second station 130. Thus, the first station 120 receives the sensing performing request from the access point 110. The second station 130 receives the sensing performing request from the first station 120. In some other embodiments, the access point 110 further transmits (226) the sensing performing request to the second station 130 in addition to transmitting (222) the sensing performing request to the first station 120. For the first station 120 and the second station 130, after receiving the sensing performing requests, the first station 120 and the second station 130 perform (230), based on received sensing performing request, the sensing procedures.

In this way, target sensing between non-access-point stations is achieved, such that sensing coverage is extended and a sensing effect is improved.

In some embodiments, performing of the sensing procedure may be that one of the first station 120 and the second station 130 serving as a sensing transmitter transmits a sensing reference signal to the other one serving as a sensing receiver. FIG. 2 illustratively illustrates a case in which the second station 130 serves as the sensing transmitter and the first station 120 serves as the sensing receiver. In other embodiments, the second station 130 may serve as the sensing receiver and the first station 120 serves as the sensing transmitter.

With reference to FIG. 2, the sensing procedure mentioned in the embodiments shown in FIG. 2 may be referred to as a first sensing procedure for a sensing target. In some embodiments, the sensing procedure may be triggered by at least one of the access point 110, a location management device, a remote cloud node, and a terminal device that is different from the first station 120 or the second station 130 and has a sensing capability.

In some embodiments, the first sensing procedure may be triggered based on at least one of the following metrics: a sensing quality of a second sensing procedure between the access point 110 and a third station for a sensing target, in which the third station is the first station 120, the second station 130 or a station other than the first station 110 and the second station 130; a sensing signal quality of the second sensing procedure; or a location of the sensing target.

In some embodiments, a triggering condition of the first sensing procedure may comprise one or more conditions. The conditions may specifically comprise: the sensing signal quality being lower than a signal quality threshold; a duration during which the sensing signal quality is lower than the signal quality threshold reaching an observation window duration (the duration of the observation window may be predefined); communication between the access point 110 and the third station that are associated with the second sensing procedure being non-line-of-sight (NLOS) communication (for example, the first sensing procedure is triggered when non-line-of-sight communication is performed between the access point and the third station); a predefined sensing scenario or sensing area that are based on a sensing service; and the sensing target arriving at a predetermined location.

In some embodiments, the sensing performing request may comprise one or more sensing configuration information. The sensing configuration information comprises but is not limited to: an indication of sensing role assignment between the first station 120 and the second station 130, sensing resource alignment information of the first station 120 and the second station 130, sampling frequency of a sensing signal of the sensing procedure, sensing time information of the sensing procedure, a format of the sensing signal of the sensing procedure, and a format and a rule of sensing performing feedback for the sensing performing request.

In some embodiments in which the sensing performing request comprises the indication of the sensing role assignment between the first station 120 and the second station 130, the sensing role assignment of two sensing parties of the first station 120 and the second station 130 can be determined by the access point 110.

In some embodiments, in order to determine the first station 110, the access point 110 may select, among a station set associated with the access point 110, a first target station having a sensing capability and a direct link setup capability as the first station 120. In some embodiments, in order to select the first target station, the access point 110 may determine, among the station set, a station subset having a sensing capability and a direct link setup capability, and determine, based on a location of the sensing target of the sensing procedure and history location information of stations in the station subset, the first target station among the station subset.

In some embodiments, in order to determine the second station 130, the access point 110 may transmit, to the first station 120, a link query request for direct link information between the first station 120 and at least one other station, receive, from the first station 120, a link query feedback for the link query request, and select, based on the link query feedback and among a station set associated with the access point 110, a second target station as the second station 130.

At the first station 120, the first station 120 receives the above link query request from the access point 110 and transmits the link query feedback for the link query request to the access point 110 accordingly.

In some embodiments, the link query feedback comprises direct link information or indicates that no direct link information exists.

In some embodiments, in order to select the second target station, the access point 110 may determine that the link query feedback comprises direct link information, and determine, based on the direct link information and a sensing criterion for a station, a station fulfilling the sensing criterion among the at least one other stations as the second target station.

In some other embodiments, in order to select the second target station, the access point 110 may determine that the link query feedback indicates that no direct link information exists or the direct link information indicates that none of the at least one direct link corresponding to the at least one other station fulfills the sensing criterion for a station, and select, among the station set, a station fulfilling the sensing criterion as the second target station.

In some embodiments, the sensing criterion comprises at least a sensing capability and a direct link setup capability. In some other embodiments, in addition to a sensing capability and a direct link setup capability, the sensing criterion may further comprise one or more sensing criteria of sensing resolution, power saving state information, reference signal receiving power (RSRP), or line-of-sight (LOS) communication with the access point 110, etc.

In some embodiments, the link query request is for polling direct link information between the first station 110 and a plurality of other stations.

In some embodiments, the direct link information may comprise a connection state of at least one direct link corresponding to at least one other station. Alternatively or additionally, the direct link information may further comprise a channel state of the at least one direct link.

In some embodiments, the access point 110 may transmit, to the first station 120, a link setup request for indicating that the first station 120 to set up the direct link with the second station 130. At the first station 120, the first station 120 receives the above link setup request from the access point 110 and sets up the direct link with the second station 130 accordingly. In some embodiments, the first station 120 transmits, to the access point 110, link setup feedback for the link setup request. At the access point 110, the access point 110 may receive the link setup feedback from the first station 120. The link setup feedback is for indicating that a setup of the direct link has been completed.

In some embodiments, the first station 120 may request information of a sensing capability and a direct link setup capability of the second station 130 from the second station 130, and determine, based on information of the sensing capability and the direct link setup capability of the second station 130, the sensing role assignment between the first station 120 and the second station 130. Accordingly, at the second station 130, the second station 130 receives the request for the information of the sensing capability and the direct link setup capability of the second station 130 by the first station 120, and transmits, to the first station 120, the information of the sensing capability and the direct link setup capability of the second station 130, and receives, from the first station 120, the sensing role assignment between the first station 120 and the second station 130 determined by the first station 120. In this way, sensing role assignment of two sensing parties is determined by the first station 120.

In some other embodiments, the first station 120 may transmit, to the second station 130, information of a sensing capability and a direct link setup capability of the first station 120, and receive, from the second station 130, the sensing role assignment determined by the second station 130. Accordingly, at the second station 130, the second station 130 receives, from the first station 120, the information of the sensing capability and the direct link setup capability of the first station 120, determines, based on the information of the sensing capability and the direct link setup capability of the first station 120, the sensing role assignment between the first station 120 and the second station 130, and may transmit the determined sensing role assignment to the first station 120. In this way, the sensing role assignment of two sensing parties is determined by the second station 130.

In some embodiments, the access point 110 may further receive, from the first station 120 or the second station 130, a sensing performing feedback for the sensing performing request.

In some embodiments, the sensing performing feedback may comprise original sensing channel information between the first station 120 and the second station 130. In some other embodiments, the sensing performing feedback may comprise data after processing, by the first station 120 or the second station 130, a sensing signal of the sensing procedure.

In some embodiments, based on determining that the first station 120 is a sensing receiver in the sensing procedure, the first station 120 may transmit, to the access point 110, the sensing performing feedback for the sensing performing request.

In some other embodiments, based on determining that the second station 130 is a sensing receiver in the sensing procedure, the second station 130 may transmit, to the access point 110, the sensing performing feedback for the sensing performing request.

With reference to FIG. 2, in some embodiments, after receiving the sensing performing request from the access point 110, the first station 120 transmits the sensing performing request to the second station 130. Accordingly, at the second station 130, the second station 130 receives the sensing performing request from the first station 120.

At the access point 110, in some embodiments, one or more of the sensing performing request, the link query request, the link setup request, etc. may be transmitted via a message having a predefined format. The predefined format comprises one or more of a message type field, a bitmap field and a report information field. In some embodiments, one or more of the sensing performing feedback, the link query feedback, the link setup feedback, etc. may be received via a message having the above predefined format.

At the first station 120, in some embodiments, one or more of the sensing performing request, the link query request, or the link setup request, etc. may be received via a message having a predefined format. The predefined format comprises one or more of a message type field, a bitmap field, or a report information field, etc. In some embodiments, one or more of the sensing performing feedback, the link query feedback, the link setup feedback, etc. may be transmitted via a message having the predefined format.

At the second station 130, in some embodiments, the sensing performing request may be received via a message having a predefined format. The predefined format comprises one or more of a message type field, a bitmap field, a report information field, etc. In some embodiments, the sensing performing feedback is transmitted via a message having a predefined format.

At the second station 130, in some embodiments, the message type field indicates the sensing performing request. Accordingly, the bitmap field indicates whether the sensing role assignment between the first station and the second station 130 is indicated by the access point 110. In some embodiments, the message type field indicates the sensing performing feedback. The bitmap field indicates a content type of the sensing performing feedback. In some embodiments, the message type field indicates the sensing performing request. The report information field comprises at least one of the following sensing configuration information: the sensing resource alignment information of the first station 120 and the second station 130, the sampling frequency of the sensing signal of the sensing procedure, the sensing time information, the format of the sensing signal of the sensing procedure, or the format and the rule of the sensing performing feedback. In some embodiments, the message type field indicates the sensing performing feedback. The report information field comprises content of the sensing performing feedback.

At the access point 110 or the first station 120, in some embodiments, the message type field may indicate one of the sensing performing request, the link query request, the link setup request, the sensing performing feedback, the link query feedback and the link setup feedback. In some embodiments, the message type field indicates the sensing performing request. Accordingly, the bitmap field indicates whether the sensing role assignment between the first station 120 and the second station 130 is indicated by the access point 110. In some embodiments, the message type field indicates the link query request. Accordingly, the bitmap field indicates that all direct link information between the first station 120 and other stations is polled, or indicates that direct link information between the first station 120 and other stations corresponding to a specified first association identification (AID) is polled(AID). In some embodiments, the message type field indicates the link setup request. Accordingly, the bitmap field indicates that the first station 120 sets up the direct link with the second station 130 corresponding to a specified second AID. In some embodiments, the message type field indicates the sensing performing feedback. Accordingly, the bitmap field indicates the content type of the sensing performing feedback. In some embodiments, the message type field indicates the link query feedback. Accordingly, the bitmap field indicates the specified first AID or indicates that no direct link information exists. In some embodiments, the message type field indicates the link setup feedback. Accordingly, the bitmap field indicates whether setup of the direct link is successful.

In some embodiments, the message type field indicates the sensing performing request. Accordingly, the report information field comprises at least one of the following sensing configuration information: the sensing resource alignment information of the first station 120 and the second station 130, the sampling frequency of the sensing signal of the sensing procedure, the sensing time information, the format of the sensing signal of the sensing procedure, or the format and the rule of the sensing performing feedback. In some embodiments, the message type field indicates the sensing performing feedback. Accordingly, the report information field comprises content of the sensing performing feedback. In some embodiments, the message type field indicates the link query feedback. Accordingly, the report information field comprises the direct link information. In some embodiments, the message type field indicates the link setup feedback. Accordingly, the report information field comprises an error report of setup failure of the direct link.

In order to adapt to a complex sensing environment, extend a sensing range of the AP, and improve accuracy and reliability of sensing, in an AP-assisted and TDLS-based sensing mechanism for 802.1 1bf proposed in the embodiments of the disclosure, the sensing initiator may trigger the AP as a sensing responder to initiate a TDLS-based sensing procedure based on a certain triggering mechanism (e.g. the signal quality between the AP and the STA, and the location of the sensing target). Therefore, the AP is required to poll TDLS link information of its associated STA, and then select and configure an STA pair to setup a TDLS link for sensing based on polling information. A novel triggering mechanism is proposed in the embodiments of the disclosure provides. A sensing initiator can trigger the AP to initiate a TDLS-based sensing among non-AP STAs on demand. For example, when the sensing target is outside the sensing area of an AP, the sensing initiator can trigger the AP to initiate TDLS-based sensing among the associated STAs based on the location of the sensing target, which would improve the sensing accuracy and reliability due to existence of line-of-sight (LoS) path among STAs.

According to the triggering mechanism in the embodiments of the disclosure, TDLS-based sensing may be triggered by a sensing initiator with certain metrics (such as sensing quality, sensing signal quality and a location of a sensing target). The sensing initiator transmits a TDLS-based sensing mode request to a sensing responder. The sensing responder will initiate a TDLS-based sensing procedure.

In the sensing roles in TDLS-based sensing, the sensing initiator is a function entity initiating a TDLS-based sensing session. In some embodiments, the sensing initiator is collocated with the AP. That is, the sensing initiator is in the AP. In some other embodiments, the sensing initiator, such as a location management function (LMF) entity, a remote cloud node or a third device, may be located other than a current AP. For example, the third device is another terminal device having a sensing capability. The sensing responder is an STA (that is, an AP STA or a non-AP STA) participating in a TDLS-based sensing session initiated by the sensing initiator. In some embodiments, the sensing responder may be collocated with the sensing initiator on the same STA. That is, the sensing responder and the sensing initiator may be on the same STA. For example, the sensing responder and the sensing initiator may be on the same AP. In some other embodiments, the sensing responder may be located in a different STA other than the sensing initiator. The sensing transmitter may be an STA transmitting a sensing reference signal for sensing measurement in a sensing session through a TDLS link. In some embodiments, the sensing transmitter is a non-AP STA having a TDLS link capability. The sensing receiver is an STA receiving the sensing reference signal transmitted by the sensing transmitter and performing the sensing measurement in the sensing session. In some embodiments, the sensing transmitter may be a non-AP STA having a TDLS link capability.

In some embodiments, the sensing initiator, the sensing responder and the sensing transmitter are configured in an AP. AP conducts a wireless local area network based sensing with a non-AP STA. When the sensing target moves to a room which is dominated by non-line-of-sight (NLOS) between a current AP and STA, the sensing signal quality drops below a threshold, and a sensing quality result is greatly affected. The sensing initiator then triggers TDLS-based sensing for a non-AP state. In some other embodiments, TDLS-based sensing may be triggered after a period of window time observation. When the sensing responder continues to report low-quality sensing measurement, or based on pre-knowledge of sensing target positioning (such as entering an area having potentially low wireless local area network sensing (AP-STA) quality) m, the sensing initiator may trigger the TDLS-based sensing.

In some solutions, the TDLS link does not support polling by an AP. The AP is transparent during the TDLS process between non-AP STAs. However, the TDLS link comprises both channel and STA connection state which is beneficial for sensing. Therefore, the embodiments of the disclosure propose an enhanced polling solution for an AP to poll a TDLS link state between associated STAs.

Compared with some solutions in which the AP is transparent for TDLS, the AP in the solution of the embodiments of the disclosure may indicate TDLS link setup and sensing between related STAs. The AP collects sensing abilities, so as to support given sensing requirements of non-AP personnel in an interesting area. The AP may select non-AP STAs for sensing based on the collected capability information and TDLS link status. The AP may indicate non-AP STAs to set up a TDLS link and configure sensing for selected STA pairs.

An embodiments of the disclosure supports novel signaling for extended polling and settings of STA-STA-based sensing. A novel method for combining signaling with a novel program is provided, so as to implement an STA-based sensing mechanism.

The solution of the embodiments of the disclosure is facilitates passive sensing outside coverage of an AP and extends a sensing range of a traditional AP. In addition, deployment cost of dual-station passive sensing is reduced. For example, it is not required to deploy APs in each room of for indoor scenario. Moreover, flexibility of adaptively switching between AP-STA-based sensing and STA-STA-based sensing is increased. The AP may select suitable devices for sensing on demand. For example, the access point 110 may select a pair of STAs for passive sensing where the LOS path exists between the STAs, such that accuracy and reliability of sensing are improved.

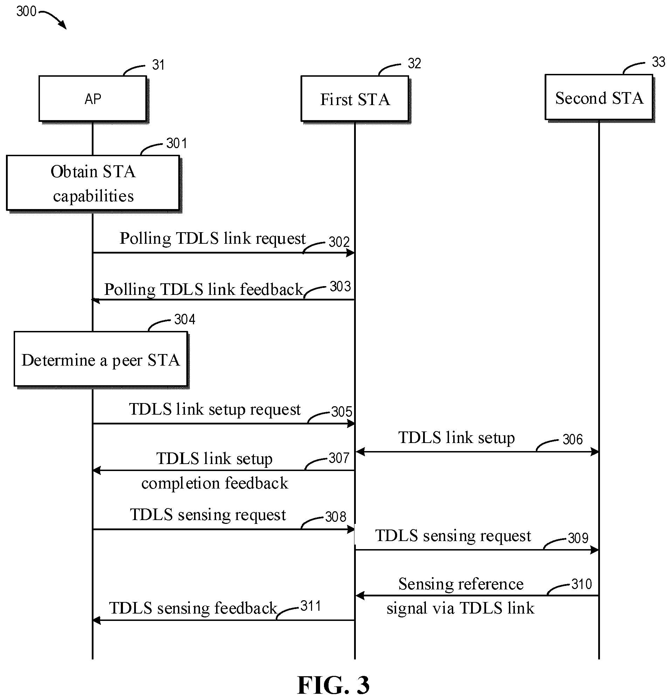

FIG. 3 illustrates a schematic diagram of a sensing process according to some other embodiments of the disclosure. As shown in a sensing process 300 shown in FIG. 3, in operation 301, AP 31 obtains capability information of an STA, such as information on whether the STA has a sensing capability and a TDLS supporting capability. In operation 302, the AP 31 transmits a polling TDLS link request to a first STA 32. In operation 303, the first STA 32 returns a polling TDLS link feedback to the AP 31. In operation 304, the AP 31 determines a peer STA, that is, a second STA 33. In operation 305, the AP 31 transmits a TDLS link setup request to the first STA 32. In operation 306, the first STA 32 sets up a TDLS link by with the second STA 33. In operation 307, the first STA 32 returns TDLS link setup completion feedback to the AP 31. In operation 308, the AP 31 transmits a TDLS sensing request to the first STA 32. In operation 309, the first STA 32 transmits a TDLS sensing request to the second STA 33. In operation 310, the second STA 33 transmits, to the first STA 32, a sensing reference signal via a TDLS link. In operation 311, the first STA 32 returns TDLS sensing feedback to the AP 31.

The sensing process 300 shown in FIG. 3 may be for a scenario where the sensing initiator, the sensing responder and the AP 31 are collocated. The above AP 31 may be an example of the access point 110. The first STA 32 may be an example of the first station 120. The second STA 33 may be an example of the second station 130. Moreover, as an example, the polling TDLS link request may correspond to an example of the polling TDLS link request. The polling TDLS link feedback (or referred to as TDLS link information feedback) may correspond to an example of the link query feedback. The TDLS link setup request may correspond to an example of the link setup request. The TDLS link setup completion feedback may correspond to an example of the link setup feedback. The TDLS sensing request may correspond to an example of the sensing performing request. The TDLS sensing feedback may correspond to an example of the sensing performing feedback. With reference to FIG. 3, embodiments of the disclosure will be described in further detail below.

In some embodiments, the AP 31 obtains STA capabilities of sensing and TDLS-support. Specifically, the TDLS-support capability can be described through extended capabilities, see Extended Capabilities field, bit 37 to bit 39 in IEEE P802.11bf. The sensing capability can be described through extended capabilities, see wireless local area network sensing and storage benchmark protocol (SBP) in IEEE P802. 1 1bf.

In some embodiments, the AP 31 selects an STA having a sensing capability and a TDLS-support capability and polls a candidate STA (e.g. the first STA 32) for its current TDLS link information (an example of direct link information) via an enhanced polling frame (that is, link query request) with the TDLS link. The first STA 32 may serve as a sensing receiver or a sensing transmitter for a triggering mechanism based and TDLS-based sensing. In some embodiments, the first STA 32 may be preselected by the AP 31 who may have knowledge about the location of the first STA 32 based on historical positioning estimation of the first STA 32, and the sensing target.

In some embodiments, when a link query is carried out, the first STA 32 may report current TDLS link information to the AP 31 through a TDLS-supported polling feedback frame. In some embodiments, the TDLS link information may comprise but is not limited to current status of the TDLS link, such as TDLS connection status, e.g., connected peers, an operating channel and power saving state information. The TDLS link information may further comprise channel status of a link channel, such as a LOS/NLOS indication and a channel quality. In some embodiments, in case of no TDLS connection has been built or maintained by the first STA 32, the first STA 32 will not give feedback or indicates that no TDLS link exists in the link query feedback.

In some embodiments, the AP 31 determines a sensing STA pair (including a target STA and a peer STA). That is, the AP 31 determines the first STA 32 and the second STA 33 among an STA set (an example of a station set). In a case of selection of a sensing STA pair, in some embodiments, based on TDLS link information feedback, a sensing requirement and a specific sensing criterion of the first STA 32, the AP 31 may select a target STA (that is, the first station 120) and a peer STA (that is, the second station 130) for TDLS-based sensing.

In some embodiments, the sensing criterion may be a capability (such as a sensing or TDLS supporting capability) related to sensing of the peer STA, sensing resolution (mapped to a TDLS link operating frequency, a bandwidth, etc.), power saving state information (such as information that an STA in a power saving state cannot serve as a peer STA), physical layer quality (such as an average RSRP value and LOS existence).

In some embodiments, if there is no TDLS link or an existing TDLS link connection cannot satisfy a sensing requirement, the AP 31 may request a sensing STA pair to set up a new TDLS link. In some embodiments, the AP 31 may select a peer STA (the second STA 33) that has no existing TDLS link with a target STA (the first STA 32) yet.

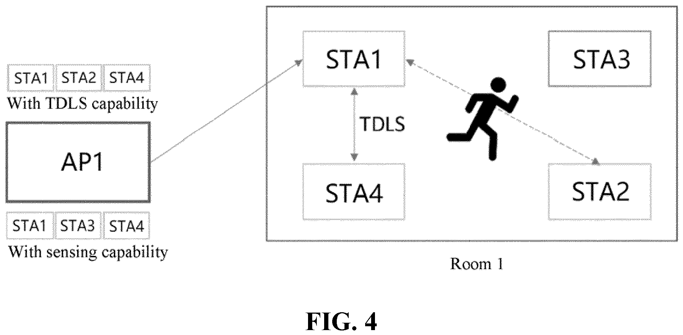

As shown in FIG. 4, a schematic diagram of setting an environment having a plurality of STAs (STA1, STA2, STA3 and STA4) according to some embodiments of the disclosure is shown. STA1 maintains a TDLS link with STA4. However, the AP may request, based on STA capability information (such as information that STA4 does not support sensing) collected by the AP 31, STA1 to set up sensing settings with STA2. STA1 serves as the first STA 32. STA2 serves as the peer STA, that is, the second STA 33.

In some embodiments, the AP 31 requests to set up a new sensing TDLS link for a sensing STA pair. The TDLS link setup request may comprise at least peer STA information, e.g. a media access control address (mac) and an identification (id) or service set identification (ssid). The id or ssid may be an example of the AID.

In some embodiments, the target STA sets up a TDLS link with the peer STA. The setup may be based on an existing TDLS link procedure. If AP 31 does not define sensing roles in advance, the target STA can also exchange with peer STA, so that the target STA or the peer STA may determine sensing role assignment.

In some embodiments, the first STA 32 feedback a TDLS link setup completion situation to the AP 31. Once the TDLS and sensing configuration setup are completed, the target STA will return acknowledge feedback, that is, the link setup feedback, to the AP. For example, the link setup feedback indicates that setup of the TDLS link is successful.

In some embodiments, the AP 31 transmits a TDLS sensing request to a sensing STA pair. The TDLS sensing request may comprise sensing configuration, such as sensing role assignment (such as assignment of a sensing transmitter and a sensing receiver); sensing resource alignment information, such as time-frequency resource allocation; sampling frequency of a sensing signal; sensing time, such as start time, end time, and time for periodic/on-demand sensing; a format of the sensing reference signal (RS); a format and a rule of sensing feedback, such as feedback content and feedback time (such as continuous, periodic and on-demand manners).

In some embodiments, in a case of sensing role assignment, the sensing roles may be predefined by the AP. The AP may decide that the target STA serves as the sensing transmitter and the peer STA serves as the sensing responder accordingly, or vice versa. In some other embodiments, the AP defines only two STAs to be a sensing STA pair. The sensing roles may be defined between the two STAs through established TDLS link.

In some embodiments, the AP 31 transmits a TDLS sensing request to the target STA. The TDLS sensing request comprises sensing configuration information. The target STA transmits the sensing configuration information to a sensing peer thereof. In some other embodiments, the AP may transmit sensing requests to the sensing pair STAs respectively.

In some embodiments, the sensing transmitter transmits a sensing reference signal (RS) to the sensing receiver based on the TDLS sensing request and sensing configuration through the set up TDLS link. The sensing transmitter transmits a sensing RS to the sensing receiver by means of a sensing channel within a sensing time according to the sensing configuration based on the TDLS sensing request.

In some embodiments, the sensing receiver AP 31 reports TDLS-based sensing feedback, that is, sensing performing feedback. In some embodiments, the sensing feedback may be original sensing channel information (such as channel state information (CSI)) between the sensing transmitter and the sensing receiver. A sensing result will be processed and carried out at the AP 31 or in the cloud. In some other embodiments, the sensing receiver may process the sensing RS and feedback only processed data (such as angle of arrival (AOA), time of arrival (TOA), and codeword generated through an artificial intelligence (AI) tool) to the AP 31.

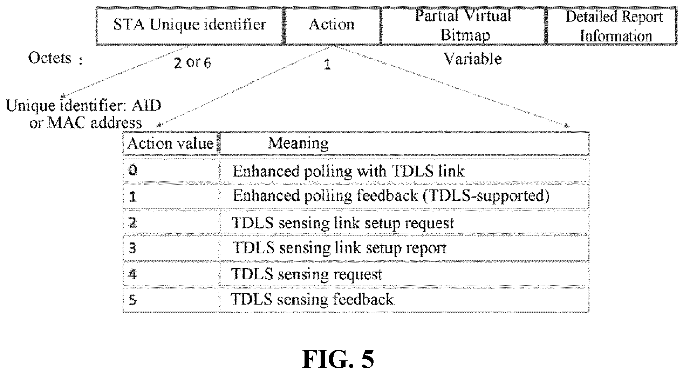

FIG. 5 illustrates a schematic diagram of a signaling format according to some embodiments of the disclosure. An embodiments of the disclosure provides a new signaling format for Wi-Fi sensing via a TDLS link. The polling TDLS link request (an example of the link query request), the polling TDLS link feedback (an example of the link query feedback), the TDLS link setup request (an example of the link setup request), the TDLS link setup completion feedback (an example of the link setup feedback), the TDLS sensing request (an example of the sensing performing request), and the TDLS sensing feedback (an example of the sensing performing feedback) all can use the new signaling format.

As shown in FIG. 5, a partial virtual bitmap field is an example of a bitmap field. An action field is an example of a message type field. A detailed report information field is an example of a report information field. An STA unique identifier comprises one or more of information including an AID, an MAC address, etc.

In a case of an enhanced polling frame with TDLS link, that is, a link query request, if the partial virtual bitmap has a length equaling 0, it means that the AP polls all TDLS links between the target STA and other STAs. Otherwise, it means that the AP queries a TDLS link between the target STA and an STA indicated by AID information of the target STA in the partial virtual bitmap field.

In a case of enhanced polling feedback with TDLS support frame, that is, the link query feedback, if the partial virtual bitmap has a length equaling 0, it means that there is no TDLS link between the target STA and other STAs. Otherwise, it indicates TDLS link information between the target STA and an STA indicated by AID information in the partial virtual bitmap. In the detailed reporting information, the STA may report other information such as TDLS connection status and link channel status.

In a case of a TDLS sensing link setup request frame, that is, in the link setup request, if the partial virtual bitmap has a length not equaling 0, it means that the AP requests to set up a TDLS link between the target STA and other STAs indicated by AID information in the partial virtual bitmap field.

In a case of a TDLS sensing link setup report frame, that is, in the link setup feedback, if the partial virtual bitmap has a length equaling 0, it means that the a new TDLS link is successfully set up. Otherwise, an error in setting up a TDLS link from the target STA will be reported in the partial virtual bitmap.

In a case of a TDLS sensing request frame, that is, in the sensing performing request, if the partial virtual bitmap has a length not equaling 0, it means that the AP requests to assign a sensing role directly to the target STA. Moreover, a sensing transmitter may be indicated by AID information of the sensing transmitter in the partial virtual bitmap field. In the detailed report information, sensing configuration may be configured, such as time-frequency resource allocation, sensing time, sensing RS periodicity and sensing feedback format.

In a case of a TDLS sensing feedback frame, that is, in the sensing performing feedback, the feedback format may be predefined in the sensing request frame. The partial virtual bitmap indicates a feedback type. The extended detailed report information is used for feedback information. For example, desired feedback obtained from a sensing receiver is AOA and TOA of a received sensing RS. The detailed report information comprises the AOA and TOA.

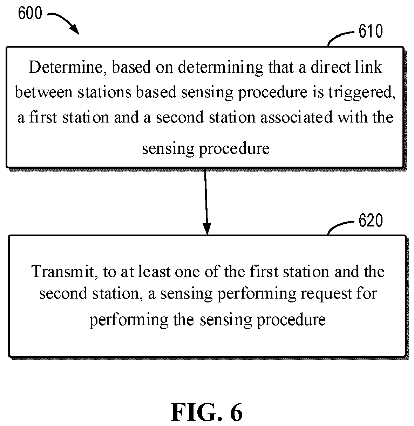

FIG. 6 illustrates a schematic diagram of a process performed by an access point 110 according to some embodiments of the disclosure. As shown in FIG. 6, in a process (method) 600, at block 610, the access point 110 determines, based on determining that a direct link between stations based sensing procedure is triggered, a first station 120 and a second station 130 associated with the sensing procedure. At block 620, the access point 110 transmits, to at least one of the first station 120 and the second station 130, a sensing performing request for performing the sensing procedure.

In some embodiments, the access point 110 may further receive, from the first station 120 or the second station 130, a sensing performing feedback for the sensing performing request. In some embodiments, the sensing performing feedback comprises original sensing channel information between the first station 120 and the second station 130. Alternatively or additionally, the sensing performing feedback comprises data after processing, by the first station 120 or the second station 130, a sensing signal of the sensing procedure.

In some embodiments, the sensing procedure may be triggered by one or combinations of the following: an access point 110, a location management device, a remote cloud node, or a terminal device, etc. The terminal device is different from the first station 120 or the second station 130 and has a sensing capability.

In some embodiments, the sensing procedure is a first sensing procedure for a sensing target. The first sensing procedure is triggered based on one or more metrics. The metrics comprises but is not limited to one or combinations of the following: a sensing quality of a second sensing procedure between the access point 110 and a third station for the sensing target, in which the third station is the first station 120, the second station 130 or a station other than the first station 120 and the second station 130; a sensing signal quality of the second sensing procedure; a location of the sensing target, etc.

In some embodiments, a triggering condition of the first sensing procedure comprises one or combinations of the following conditions. The conditions specifically comprise: the sensing signal quality being lower than a signal quality threshold; a duration during which the sensing signal quality is lower than the signal quality threshold reaching an observation window duration; communication between the access point 110 and the third station that are associated with the second sensing procedure being non-line-of-sight (NLOS) communication; a predefined sensing scenario or sensing area that are based on a sensing service; the sensing target arriving at a predetermined location, etc.

In some embodiments, the sensing performing request may comprise at least one of the following sensing configuration information. The sensing configuration information specifically comprises: an indication of sensing role assignment between the first station 120 and the second station 130, sensing resource alignment information of the first station 120 and the second station 130, sampling frequency of a sensing signal of the sensing procedure, sensing time information of the sensing procedure, a format of the sensing signal of the sensing procedure, and a format and a rule of the sensing performing feedback for the sensing performing request.

In some embodiments, in order to determine the first station 120, the access point 110 may select, among a station set associated with the access point 110, a first target station having a sensing capability and a direct link setup capability as the first station 120.

In some embodiments, in order to select the first target station, the access point 110 may determine, among the station set, a station subset having the sensing capability and the direct link setup capability, and determine, based on a location of the sensing target of the sensing procedure and history location information of stations in the station subset, the first target station from the station subset.

In some embodiments, in order to determine the second station 130, the access point 110 may transmit, to the first station 120, a link query request for direct link information between the first station 120 and at least one other station, receive, from the first station 120, a link query feedback for the link query request, and select, based on the link query feedback and among a station set associated with the access point 110, a second target station as the second station 130.

In some embodiments, the link query request is for polling direct link information between the first station 120 and a plurality of other stations. In some embodiments, the link query feedback comprises direct link information or indicates that no direct link information exists.

In some embodiments, the direct link information may comprise a connection state of at least one direct link corresponding to at least one other station. Alternatively or additionally, the direct link information may comprise a channel state of the at least one direct link.

In some embodiments, a way of selecting the second target station by the access point 110 may specifically comprise: determining that the link query feedback comprises the direct link information; and determining, based on the direct link information and a sensing criterion for a station, a station fulfilling the sensing criterion among the at least one other station as the second target station.

In some other embodiments, a a way of selecting the second target station by the access point 110 may comprise: determining that the link query feedback indicates that no direct link information exists or the direct link information indicates that none of the at least one direct link corresponding to the at least one other station fulfills a sensing criterion for a station; and selecting a station fulfilling the sensing criterion among the station set as the second target station.

In some other embodiments, the sensing criterion comprises a sensing capability and a direct link setup capability, and one or more of the following criteria such as sensing resolution, power saving state information, reference signal receiving power (RSRP), or line-of-sight (LOS) communication with the access point 110.

In some embodiments, the access point 110 may further transmit, to the first station 120, a link setup request for indicating that the first station 120 sets up the direct link with the second station 130. In some embodiments, the access point 110 may further receive, from the first station 120, a link setup feedback for the link setup request. The link setup feedback is for indicating that a setup of the direct link has been completed.

In some embodiments, some or all requests of a sensing performing request, a link query request, a link setup request, etc. may be transmitted via a message having a predefined format. The predefined format comprises one or more of the following a message type field, a bitmap field, a report information field, etc. Some or all feedback of sensing performing feedback, link query feedback, link setup feedback, etc. may be received via a message having the above predefined format.

In some embodiments, the message type field indicates one or more requests or feedback of the following: a sensing performing request, a link query request, a link setup request, a sensing performing feedback, a link query feedback and link setup feedback.

In some embodiments, the message type field indicates the sensing performing request. The bitmap field indicates whether the sensing role assignment between the first station 120 and the second station 130 is indicated by the access point 110. In some embodiments, the message type field indicates the link query request. The bitmap field indicates that all direct link information between the first station 120 and other stations is polled or indicates that direct link information between the first station 120 and the other stations corresponding to a specified first association identification (AID) is polled. In some embodiments, the message type field indicates the link setup request. The bitmap field indicates that the first station 120 sets up a direct link with the second station 130 corresponding to a specified second AID. In some embodiments, the message type field indicates the sensing performing feedback. The bitmap field indicates a content type of the sensing performing feedback. In some embodiments, the message type field indicates the link query feedback. The bitmap field indicates the specified first AID or indicates that no direct link information exists. In some embodiments, the message type field indicates the link setup feedback. The bitmap field indicates whether setup of the direct link is successful.

In some embodiments, the message type field indicates the sensing performing request. The report information field comprises at least one type of the sensing configuration information of the sensing resource alignment information of the first station 120 and the second station 130, the sampling frequency of the sensing signal of the sensing procedure, the sensing time information, the format of the sensing signal of the sensing procedure, or the format and the rule of the sensing performing feedback. In some embodiments, the message type field indicates the sensing performing feedback. The report information field comprises content of the sensing performing feedback. In some embodiments, the message type field indicates the link query feedback. The report information field comprises the direct link information. In some embodiments, the message type field indicates the link setup feedback. The report information field comprises an error report of setup failure of the direct link.

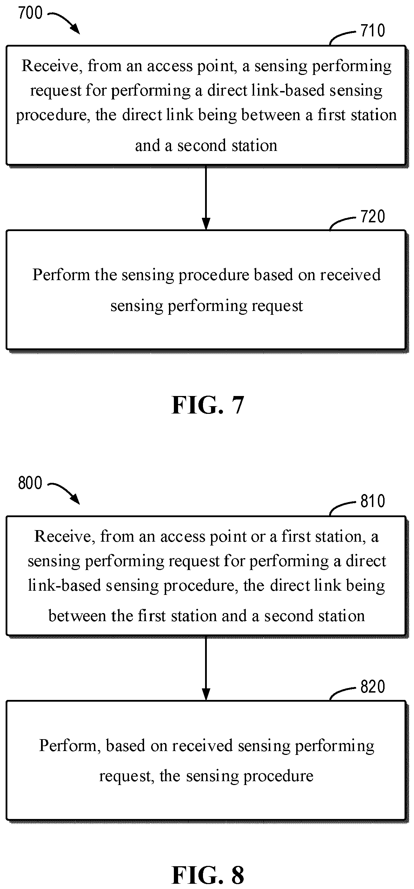

FIG. 7 illustrates a schematic diagram of a process performed by a first station 120 according to some embodiments of the disclosure. As shown in FIG. 7, in a process (method) 700, at block 710, the first station 120 receives, from the access point 110, a sensing performing request for performing a direct link-based sensing procedure, in which the direct link is between the first station 120 and a second station 130. At block 720, the first station 120 performs the sensing procedure based on received sensing performing request.

In some embodiments, the first station 120 may receive, from the access point 110, a link query request for direct link information between the first station 120 and at least one other station, and transmit, to the access point 110, a link query feedback for the link query request. The link query feedback comprises direct link information or indicates that no direct link information exists.

In some embodiments, the link query request is for polling direct link information between the first station 120 and a plurality of other stations.

In some embodiments, the first station 120 may further receive, from the access point 110, a link setup request for indicating the first station 120 to set up the direct link with the second station 130, set up the direct link, such as a TDLS link, between the first station and the second station 130, and may transmit, to the access point 110, a link setup feedback for the link setup request after direct link setup has been completed. The link setup feedback indicates that a setup of the direct link has been completed.

In some embodiments, the sensing performing request may comprise one or more of sensing configuration information, such as an indication of sensing role assignment between the first station 120 and the second station 130, sensing resource alignment information of the first station 120 and the second station 130, sampling frequency of a sensing signal of the sensing procedure, sensing time information, a format of the sensing signal of the sensing procedure, and a format and a rule of the sensing performing feedback for the sensing performing request.

In some embodiments, the first station 120 may further request information of a sensing capability and a direct link setup capability of the second station 130 from the second station 130, and determine, based on the information of the sensing capability and the direct link setup capability of the second station 130, the sensing role assignment between the first station 120 and the second station 130.

In some embodiments, the first station 120 may further transmit, to the second station 130, information of a sensing capability and a direct link setup capability of the first station 120, and receive, from the second station 130, the sensing role assignment determined by the second station 130.

In some embodiments, the first station 120 may further, based on determining the first station 120 is a sensing receiver in the sensing procedure, transmit, to the access point 110, a sensing performing feedback for the sensing performing request.

In some embodiments, the sensing performing feedback comprises one or more of the following information. The information specifically comprises: original sensing channel information between the first station 120 and the second station 130, or data after processing, by the first station 120, the sensing signal of the sensing procedure.

In some embodiments, the first station 120 may transmit, to the second station 130, the sensing performing request after receiving the sensing performing request from the access point 110.

In some embodiments, one or more of a sensing performing request, a link query request, a link setup request, etc. may be received via a message having a predefined format. The predefined format comprises one or more of a message type field, a bitmap field and a report information field. In some embodiments, one or more of the sensing performing feedback, the link query feedback, the link setup feedback, etc. may be transmitted via a message having the above predefined format.

In some embodiments, the message type field indicates one or more requests or feedback of the following: a sensing performing request, a link query request, a link setup request, sensing performing feedback, link query feedback, link setup feedback, etc.

In some embodiments, the message type field indicates the sensing performing request. The bitmap field indicates whether the sensing role assignment between the first station 120 and the second station 130 is indicated by the access point 110. In some embodiments, the message type field indicates the link query request. The bitmap field indicates that all direct link information between the first station 120 and other stations is polled by the access point 110, or indicates that direct link information between the first station 120 and other stations corresponding to a specified first association identification (AID) is polled by the access point 110. In some embodiments, the message type field indicates the link setup request. The bitmap field indicates that the first station 120 sets up a direct link with a second station 130 corresponding to a specified second AID. In some embodiments, the message type field indicates the sensing performing feedback. The bitmap field indicates a content type of the sensing performing feedback. In some embodiments, the message type field indicates the link query feedback. The bitmap field indicates the specified first AID or indicates that no direct link information exists. In some embodiments, the message type field indicates the link setup feedback. The bitmap field indicates whether setup of the direct link is successful.

In some embodiments, the message type field indicates the sensing performing request. The report information field comprises at least one of the sensing configuration information: the sensing resource alignment information of the first station 120 and the second station 130, the sampling frequency of the sensing signal of the sensing procedure, the sensing time information, the format of the sensing signal of the sensing procedure, or the format and the rule of the sensing performing feedback. In some embodiments, the message type field indicates the sensing performing feedback. The report information field comprises content of the sensing performing feedback. In some embodiments, the above message type field indicates the link query feedback. The report information field comprises the direct link information. In some embodiments, the message type field indicates the link setup feedback. The report information field comprises an error report of setup failure of the direct link.

FIG. 8 illustrates a schematic diagram of a process performed by the second station 130 according to some embodiments of the disclosure. In the process (method) 800, at block 810, the second station 130 receives, from the access point 110 or the first station 120, a sensing performing request for performing a direct link-based sensing procedure, in which the direct link being between the first station 120 and the second station 130. At block 820, the sensing procedure is performed based on received sensing performing request.

In some embodiments, the sensing performing request may comprise one or more of the following sensing configuration information: an indication of sensing role assignment between the first station 120 and the second station 130; sensing resource alignment information of the first station 120 and the second station 130; sampling frequency of a sensing signal of the sensing procedure; sensing time information; a format of the sensing signal of the sensing procedure; a format and a rule of the sensing performing feedback for the sensing performing request, etc.

In some embodiments, the second station 130 may receive the request of information of a sensing capability and a direct link setup capability of the second station 130 by the first station 120, transmit, to the first station 120, the information of the sensing capability and the direct link setup capability of the second station 130, and receive, from the first station 120, the sensing role assignment between the first station 120 and the second station 130 determined by the first station 120.

In some embodiments, the second station 130 may receive, from the first station 120, information of a sensing capability and a direct link setup capability of the first station 120, and determine, based on the information of the sensing capability and the direct link setup capability of the first station 120, the sensing role assignment between the first station 120 and the second station 130.

In some embodiments, the second station 130 may, based on determining that the second station 130 is a sensing receiver in the sensing procedure, transmit, to the access point 110, the sensing performing feedback for the sensing performing request.

In some embodiments, the sensing performing feedback comprises original sensing channel information between the first station 120 and the second station 130. Alternatively or additionally, the sensing performing feedback comprises data after processing, by the second station 130, sensing signal of the sensing procedure.

In some embodiments, the sensing performing request may be received by means of a message having a predefined format. The predefined format comprises one or more of a message type field, a bitmap field, a report information field, etc. In some embodiments, the sensing performing feedback is transmitted via a message having the above predefined format.

In some embodiments, the message type field indicates the sensing performing request. In some embodiments, the message type field is further for indicating the sensing performing feedback.

In some embodiments, the message type field indicates the sensing performing request. The bitmap field indicates whether the sensing role assignment between the first station 120 and the second station 130 is indicated by the access point 110. In some embodiments, the message type field indicates the sensing performing feedback. The bitmap field indicates a content type of the sensing performing feedback.

In some embodiments, the message type field indicates the sensing performing request. The report information field comprises at least one of the following sensing configuration information: the sensing resource alignment information of the first station 120 and the second station 130, the sampling frequency of the sensing signal of the sensing procedure, the sensing time information, the format of the sensing signal of the sensing procedure, or the format and the rule of the sensing performing feedback. In some embodiments, the message type field indicates the sensing performing feedback. The report information field comprises content of the sensing performing feedback.

In some embodiments, the apparatus further comprises means for performing other steps in some embodiments of the method. In some embodiments, the means comprises at least one processor; and at least one memory including computer program code, the at least one memory and computer program code configured to, with the at least one processor, cause the performance of the apparatus.

In some embodiments, an apparatus capable of performing any of the method 400 (for example, the access point 110) may comprise means for performing the respective steps of the method 600. The means may be implemented in any suitable form. For example, the means may be implemented in a circuitry or software module.

In some embodiments, the apparatus may comprise: based on determining that a direct link between stations based sensing procedure is triggered, means for determining the first station 120 associated with the sensing procedure; means for determining a second station 130 associated with the sensing procedure; and means for transmitting, to at least one of the first station 120 and the second station 130, a sensing performing request for performing the sensing procedure.

In some embodiments, the apparatus further comprises means for receiving, from the first station 120 or the second station 130, a sensing performing feedback for the sensing performing request.

In some embodiments, the sensing performing feedback comprises at least one of the following: original sensing channel information between the first station 120 and the second station 130, or data after processing, by the first station 120 or the second station 130, a sensing signal of the sensing procedure.

In some embodiments, the sensing procedure is triggered by at least one of the following: the access point 110, a location management device, a remote cloud node, or a terminal device that is different from the first station 120 or the second station 130 and has a sensing capability.

In some embodiments, the sensing procedure is a first sensing procedure for a sensing target. The first sensing procedure is triggered based on at least one of the following metrics: sensing quality of a second sensing procedure for a sensing target between the access point 110 and a third station, where the third station is the first station 120, the second station 130 or a station other than the first station 120 and the second station 130; sensing signal quality of the second sensing procedure; or a location of a sensing target.

In some embodiments, a triggering condition of the first sensing procedure comprises at least one of the following: the sensing signal quality being lower than a signal quality threshold; a duration during which the sensing signal quality is lower than the signal quality threshold reaching duration of an observation window; communication between the access point 110 and the third station that are associated with the second sensing procedure being non-line-of-sight (NLOS) communication; a predefined sensing scenario or sensing area that are based on a sensing service; and the sensing target arriving at a predetermined location.

In some embodiments, the sensing performing request may comprise at least one of the following sensing configuration information: an indication of sensing role assignment between the first station 120 and the second station 130, sensing resource alignment information of the first station 120 and the second station 130, sampling frequency of a sensing signal of the sensing procedure, sensing time information of the sensing procedure, a format of the sensing signal of the sensing procedure, and a format and a rule of the sensing performing feedback for the sensing performing request.

In some embodiments, the means for determining the first station 120 comprises means for selecting, among a station set associated with the access point 110, a first target station having a sensing capability and a direct link setup capability as the first station 120.

In some embodiments, the means for selecting the first target station comprises means for determining, among the station set, a station subset having a sensing capability and the direct link setup capability; and means for determining, based on the location of the sensing target of the sensing procedure and history location information of stations in the station subset, the first target station from the station subset.

In some embodiments, the means for determining the second station 130 comprises means for transmitting, to the first station 120, a link query request for direct link information between the first station 120 and at least one other station; means for receiving, from the first station 120, link query feedback for the link query request; and means for selecting, based on the link query feedback and among the station set associated with the access point 110, a second target station as the second station 130.

In some embodiments, the link query request is for polling direct link information between the first station 120 and a plurality of other stations. In some other embodiments, the link query feedback comprises direct link information or indicates that no direct link information exists.

In some embodiments, the direct link information comprises at least one of a connection state of at least one direct link corresponding to at least one other station, or a channel state of the at least one direct link.

In some embodiments, the means for selecting the second target station comprises means for determining that the link query feedback comprises direct link information; and means for, based on the direct link information and a sensing criterion for a station, determining, a station fulfilling the sensing criterion among the at least one other station as the second target station.

In some embodiments, the means for selecting the second target station comprises means for determining that the link query feedback indicates that no direct link information exists or the direct link information indicates that none of the at least one direct link corresponding to the at least one other station fulfills a sensing criterion for a station; and means for selecting, among the station set, a station fulfilling the sensing criterion as the second target station.

In some embodiments, the sensing criterion comprises a sensing capability and a direct link setup capability, and at least one of the following: sensing resolution, power saving state information, reference signal receiving power (RSRP), or line-of-sight (LOS) communication with the access point 110.

In some embodiments, the apparatus comprises means for transmitting, to the first station 120, a link setup request for indicating the first station 120 to set up the direct link with the second station 130.

In some embodiments, the apparatus comprises means for receiving, from the first station 120, a link setup feedback for the link setup request. The link setup feedback is for indicating that setup of the direct link has been completed.

In some embodiments, at least one of the sensing performing request, the link query request and the link setup request is transmitted via a message having a predefined format. The predefined format comprises at least one of the following: a message type field, a bitmap field or a report information field. In some embodiments, at least one of the sensing performing feedback, the link query feedback or the link setup feedback is received via a message having the above predefined format.

In some embodiments, the message type field indicates one of the following: the sensing performing request, the link query request, the link setup request, the sensing performing feedback, the link query feedback or the link setup feedback.

In some embodiments, the message type field indicates the sensing performing request. The bitmap field indicates whether the sensing role assignment between the first station 120 and the second station 130 is indicated by the access point 110. In some embodiments, the message type field indicates the link query request. The bitmap field indicates that all direct link information between the first station 120 and other stations is polled, or indicates that direct link information between the first station 120 and the other stations corresponding to a specified first association identification (AID) is polled. In some embodiments, the message type field indicates the link setup request. The bitmap field indicates that the first station 120 sets up the direct link with a second station 130 corresponding to a specified second AID. In some embodiments, the message type field indicates the sensing performing feedback. The bitmap field indicates a content type of the sensing performing feedback. In some embodiments, the message type field indicates the link query feedback. The bitmap field indicates the specified first AID or indicates that no direct link information exists. In some embodiments, the message type field indicates the link setup feedback. The bitmap field indicates whether setup of the direct link is successful.

In some embodiments, the message type field indicates the sensing performing request. The report information field comprises at least one sensing configuration information of the following: the sensing resource alignment information of the first station 120 and the second station 130, the sampling frequency of the sensing signal of the sensing procedure, the sensing time information, the format of the sensing signal of the sensing procedure, or the format and the rule of the sensing performing feedback. In some embodiments, the message type field indicates the sensing performing feedback. The report information field comprises content of the sensing performing feedback. In some embodiments, the message type field indicates the link query feedback, and the report information field comprises the direct link information; or the message type field indicates the link setup feedback, and the report information field comprises an error report of setup failure of the direct link.

In some embodiments, the apparatus further comprises means for performing other steps in some embodiments of the method 600. In some embodiments, the means comprises at least one processor; and at least one memory including computer program code, the at least one memory and computer program code configured to, with the at least one processor, cause the performance of the apparatus.

In some embodiments, an apparatus capable of performing any of the method 400 (for example, the first station 120) may comprise means for performing the respective steps of the method 700. The means may be implemented in any suitable form. For example, the means may be implemented in a circuitry or software module.

In some embodiments, the apparatus may comprise means for receiving, from an access point 110, a sensing performing request for performing a direct link-based sensing procedure, the direct link being between the first station 120 and a second station 130; and means for performing the sensing procedure based on received sensing performing request.

In some embodiments, the apparatus comprises means for receiving, from the access point 110, a link query request for direct link information between the first station 120 and at least one other station; and means for transmitting, to the access point 110, a link query feedback for the link query request. The link query feedback comprises direct link information or indicates that no direct link information exists.

In some embodiments, the link query request is for polling direct link information between the first station 120 and a plurality of other stations.

In some embodiments, the apparatus further comprises means for receiving, from the access point 110, a link setup request indicating that the first station 120 sets up the direct link with the second station 130; means for establishing the direct link between the first station and the second station 130; and means for transmitting, to the access point 110, a link setup feedback for the link setup request. The link setup feedback indicates that a setup of the direct link has been completed.

In some embodiments, the sensing performing request comprises at least one of the following sensing configuration information: an indication of sensing role assignment between the first station 120 and the second station 130, sensing resource alignment information of the first station 120 and the second station 130, sampling frequency of a sensing signal of the sensing procedure, sensing time information, a format of the sensing signal of the sensing procedure, and a format and a rule of the sensing performing feedback for the sensing performing request.

In some embodiments, the apparatus comprises means for requesting information of a sensing capability and a direct link setup capability of the second station 130 from the second station 130; and means for determining, based on the information of the sensing capability and the direct link setup capability of the second station 130, the sensing role assignment between the first station 120 and the second station 130 .

In some embodiments, the apparatus comprises means for transmitting, to the second station 130, information of a sensing capability and a direct link setup capability of the first station 120; and means for receiving, from the second station 130, the sensing role assignment determined by the second station 130.

In some embodiments, the apparatus comprises means for, based on determing that the first station 120 is a sensing receiver in the sensing procedure, transmitting, to the access point 110, sensing performing feedback for the sensing performing request.

In some embodiments, the sensing performing feedback comprises at least one of the following: original sensing channel information between the first station 120 and the second station 130, or data after processing, by the first station 120, a sensing signal of the sensing procedure.

In some embodiments, the apparatus further comprises means for transmitting, to the second station 130, the sensing performing request after receiving the sensing performing request from the access point 110.

In some embodiments, at least one of the sensing performing request, the link query request and the link setup request is received via a message having a predefined format, and the predefined format comprises at least one of the following: a message type field, a bitmap field or a report information field; or at least one of the sensing performing feedback, the link query feedback or the link setup feedback is transmitted via a message having a predefined format.

In some embodiments, the message type field indicates one of the sensing performing request, the link query request, the link setup request, the sensing performing feedback, the link query feedback or the link setup feedback.

In some embodiments, the message type field indicates the sensing performing request, and the bitmap field indicates whether the sensing role assignment between the first station 120 and the second station 130 is indicated by the access point 110; the message type field indicates the link query request, and the bitmap field indicates that all direct link information between the first station 120 and the other stations is polled by the access point 110 or indicates that direct link information between the first station 120 and the other stations corresponding to a specified first association identification (AID) is polled by the access point 110; the message type field indicates the link setup request, and the bitmap field indicates that the first station 120 sets up a direct link with a second station 130 corresponding to a specified second AID; the message type field indicates the sensing performing feedback, and the bitmap field indicates a content type of the sensing performing feedback; the message type field indicates the link query feedback, and the bitmap field indicates the specified first AID or indicates that no direct link information exists; or the message type field indicates the link setup feedback, and the bitmap field indicates whether setup of the direct link is successful.

In some embodiments, the message type field indicates the sensing performing request, and the report information field comprises at least one of the following sensing configuration information: the sensing resource alignment information of the first station 120 and the second station 130, the sampling frequency of the sensing signal of the sensing procedure, the sensing time information, the format of the sensing signal of the sensing procedure, or the format and the rule of the sensing performing feedback; the message type field indicates the sensing performing feedback, and the report information field comprises content of the sensing performing feedback; the message type field indicates the link query feedback, and the report information field comprises the direct link information; or the message type field indicates the link setup feedback, and the report information field comprises an error report of setup failure of the direct link.

In some embodiments, the apparatus further comprises means for performing other steps in some embodiments of the method 700. In some embodiments, the means comprises at least one processor; and at least one memory including computer program code, the at least one memory and computer program code configured to, with the at least one processor, cause the performance of the apparatus.

In some embodiments, an apparatus capable of performing any of the method 400 (for example, the second station 130) may comprise means for performing the respective steps of the method 800. The means may be implemented in any suitable form. For example, the means may be implemented in a circuitry or software module.

In some embodiments, the apparatus may comprise means for receiving, from an access point 110 or a first station 120, a sensing performing request for performing a direct link-based sensing procedure, the direct link being between the first station 120 and a second station 130; and means for performing, based on received sensing performing request, the sensing procedure.

In some embodiments, the sensing performing request may comprise at least one of the following sensing configuration information: an indication of sensing role assignment between the first station 120 and the second station 130, sensing resource alignment information of the first station 120 and the second station 130, sampling frequency of a sensing signal of the sensing procedure, sensing time information, a format of the sensing signal of the sensing procedure, and a format and a rule of the sensing performing feedback for the sensing performing request.

In some embodiments, the apparatus comprises means for receiving the request for the information of the sensing capability and the direct link setup capability of the second station 130 by the first station 120; means for transmitting, to the first station 120, the information of the sensing capability and the direct link setup capability of the second station 130; and means for receiving, from the first station 120, the sensing role assignment between the first station 120 and the second station 130 determined by the first station 120.

In some embodiments, the apparatus comprises means for receiving, from the first station 120, the information of the sensing capability and the direct link setup capability of the first station 120; and means for determining, based on the information of the sensing capability and the direct link setup capability of the first station 120, the sensing role assignment between the first station 120 and the second station 130.

In some embodiments, the apparatus comprises means for, based on determining that the second station 130 is a sensing receiver in the sensing procedure, transmitting, to the access point 110, a sensing performing feedback for the sensing performing request.

In some embodiments, the sensing performing feedback comprises at least one of the following: original sensing channel information between the first station 120 and the second station 130, and data after processing, by the second station 130, sensing signal of the sensing procedure.

In some embodiments, the sensing performing request is received via a message having a predefined format, and the predefined format comprises at least one of a message type field, a bitmap field and a report information field; or the sensing performing feedback is transmitted via a message having a predefined format.

In some embodiments, the message type field indicates one of the sensing performing request and the sensing performing feedback.

In some embodiments, the message type field indicates the sensing performing request, and the bitmap field indicates whether the sensing role assignment between the first station 120 and the second station 130 is indicated by the access point 110; or the message type field indicates the sensing performing feedback, and the bitmap field indicates a content type of the sensing performing feedback.

In some embodiments, the message type field indicates the sensing performing request, and the report information field comprises at least one sensing configuration information of the following: the sensing resource alignment information of the first station 120 and the second station 130, the sampling frequency of the sensing signal of the sensing procedure, the sensing time information, the format of the sensing signal of the sensing procedure, or the format and the rule of the sensing performing feedback; or the message type field indicates the sensing performing feedback, and the report information field comprises content of the sensing performing feedback.

In some embodiments, the apparatus further comprises means for performing other steps in some embodiments of the method In some embodiments, the apparatus further comprises means for performing other steps in some embodiments of the method 300. In some embodiments, the means comprises at least one processor; and at least one memory including computer program code, the at least one memory and computer program code configured to, with the at least one processor, cause the performance of the apparatus.. In some embodiments, the means comprises at least one processor; and at least one memory including computer program code, the at least one memory and computer program code configured to, with the at least one processor, cause the performance of the apparatus.

Some embodiments of the disclosure further provide a communication device. The communications device comprises: a processor; and a transceiver, which is coupled to the processor in a communication manner. The processor is configured to cause the device to perform the method 600.

Some other embodiments of the disclosure further provide a communication device. The communications device comprises: a processor; and a transceiver, which is coupled to the processor in a communication manner. The processor is configured to cause the device to perform the method 700.

Some other embodiments of the disclosure further provide a communication device. The communications device comprises: a processor; and a transceiver, which is coupled to the processor in a communication manner. The processor is configured to cause the device to perform the method 800.

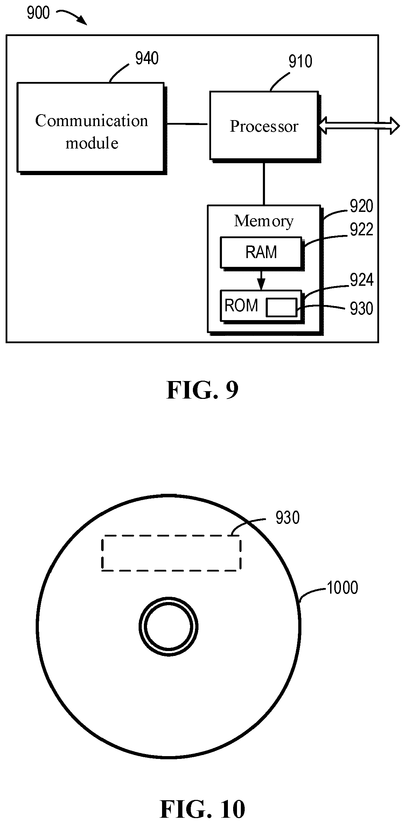

FIG. 9 illustrates a simplified block diagram of an electronic device 900 suitable for implementing embodiments of the present disclosure. The device 900 may be provided to implement the communication device, such as the access point 110, the first station 120 and the second station 130 shown in FIG. 1A. As shown in the figure, the device 900 comprises one or more processors 910. One or more memories 920 are coupled to the processor 910. Moreover, one or more communication modules 940 are coupled to the processor 910.

The communication module 940 is for bidirectional communication. For example, the communication module 940 may comprise a transmitter, a receiver or a transceiver for an embodiments of the disclosure. A communication interface may represent any interface necessary for communication with other network elements.

The processor 910 may be of any type suitable to the local technology network and may include but is not limited to one or more of a general-purpose computer, a special-purpose computer, a micro-controller, a digital signal processor (DSP) and a controller-based multi-core controller architecture. The device 900 may have a plurality of processors, such as application specific integrated circuit chips, which are slaved in time to a clock synchronized with a master processor.

The memory 920 may comprise one or more non-volatile memories and one or more volatile memories. Examples of the non-volatile memory include but is not limited to a read only memory (ROM) 924, an erasable programmable read only memory (EPROM), a flash memory, a hard disk, a compact disk (CD), a digital video disk (DVD) and other magnetic and/or optical storage. An instance of the volatile memory includes but is not limited to a random access memory (RAM) 922 and other volatile memories that do not last in the power-down duration.

The computer program 930 includes a computer-executable instructions executed by an associated processor 910. The program 930 may be stored in the ROM 920. The processor 910 may perform any suitable actions and processing by loading the program 930 into the RAM 922.

Examples of the disclosure may be implemented by means of the program 930 such that the device 900 can execute any process of the disclosure as discussed with reference to FIGs. 2-8. Embodiments of the disclosure can further be implemented by hardware or a combination of software and hardware.

In some embodiments, the program 930 may be tangibly included in a computer-readable medium. The computer-readable medium may be included in the device 900 (such as the memory 920) or other storage devices accessible by the device 900. The program 930 may be loaded from the computer-readable medium into the RAM 922 to be executed. The computer-readable medium may comprise any type of tangible non-volatile memory, such as an ROM, an EPROM, a flash memory, a hard disk, a CD and a DVD.

FIG. 10 illustrates an example of a computer-readable medium 1000 in a form of a CD or DVD. The computer-readable medium stores a program 930.

Generally, various examples of the disclosure can be implemented in hardware, special-purpose circuit, software, logic or any combination thereof. Some aspects can be implemented in hardware, while other aspects can be implemented in firmware or software, which can be executed by a controller, microprocessor or other computing devices. Although various aspects of examples of the disclosure are shown and described as block diagrams and flow diagrams or represented by means of some other diagrams, it should be understood that blocks, apparatuses, systems, techniques or methods described herein can be implemented as non-limitative instances, hardware, software, firmware, special-purpose circuits, logic, general-purpose hardware, controllers, other computing devices, or a certain combination thereof, etc.

The disclosure further provides at least one computer program product tangibly stored on a non-transitory computer-readable storage medium. The computer program product includes a computer-executable instruction, such as instructions included in a program module. The instruction is executed in a device on a real or virtual target processor, so as to execute the methods 600, 700 and 800 described above with reference to FIGs. 6-8. Generally, the program module includes a routine, a program, a library, an object, a class, a component, a data structure, etc. that executes specific tasks or implement specific abstract data types. In various examples, functions of program modules can be combined or divided between the program modules according to requirements. Machine-executable instructions for the program modules can be executed locally or in distributed devices. In the distributed devices, the program modules can be located in both local and remote storage media.

Computer program codes configured to implement the methods of the disclosure can be written in one or more programming languages. These computer program codes may be provided for a processor of a general-purpose computer, special-purpose computer, or other programmable data processing apparatuses, such that the program codes cause the functions/operations specified in the flow diagrams and/or block diagrams to be implemented when executed by the computer or other programmable data processing apparatuses. The program codes may be executed entirely on a computer, partly on a computer, as a stand-alone software package, partly on a computer and partly on a remote computer, or entirely on a remote computer or server.

In context of the disclosure, the computer program codes or related data may be carried by any suitable carrier, so as to enable an apparatus, device or processor to execute various processing and operations described above. Instances of the carrier include signals, computer-readable media, etc. Instances of signals may comprise electrical, optical, radio, acoustic or other forms of propagated signals, such as carrier waves and infrared signals.

The computer-readable medium may be any tangible medium that includes or stores a program configured for or related to an instruction execution system, apparatus or device. The computer-readable medium may be a computer-readable signal medium or a computer-readable storage medium. The computer-readable medium may comprise but is not limited to an electronic, magnetic, optical, electromagnetic, infrared or semiconductor system, apparatus or device, or any suitable combination thereof. More detailed instances of the computer-readable storage media include an electrical connection with one or more wires, a portable computer disk, a hard disk, a random access memory (RAM), a read-only memory (ROM), an erasable programmable read-only memory (EPROM or flash memory), an optical storage device, a magnetic storage device or any suitable combination thereof.

Moreover, although the operations of the methods of the disclosure are described in a specific order in the accompanying drawings, it is not required or implied that these operations must be performed in a specific order or that all illustrated operations must be executed to achieve desired results. Conversely, the operations depicted in the flow diagrams may be executed in a different order. Additionally or alternatively, some operations can be omitted, a plurality of operations are combined into one operation to be performed, and/or one operation is broken down into a plurality of operations to be performed. It should further be noted that features and functions of two or more apparatuses according to the disclosure may be embodied in one apparatus. Conversely, the features and functions of one apparatus described above may be further divided to be embodied by a plurality of apparatuses.

Although the disclosure is described with reference to several particular embodiments, it should be understood that the disclosure is not limited to the disclosed particular embodiments. The disclosure aims to cover various modifications and equivalent settings included within the spirit and scope of the appended claims.

## Claims

1. An access point (110), comprising:
at least one processor; and
at least one memory storing instructions, the instructions when executed by the at least one processor causing the access point at least to:
determine (210), based on determining that a direct link between stations based sensing procedure is triggered, a first station and a second station associated with the sensing procedure; and
transmit (222), to at least one of the first station and the second station, a sensing performing request for performing the sensing procedure.

2. The access point (110) of claim 1, wherein the access point is further caused to:
receive, from the first station or the second station, a sensing performing feedback for the sensing performing request,
wherein for example the sensing performing feedback comprises at least one of the following:
original sensing channel information between the first station and the second station; or
data after processing, by the first station or the second station, a sensing signal of the sensing procedure.

3. The access point of claim 1, wherein the sensing procedure is triggered by at least one of the following:
the access point;
a location management device;
a remote cloud node; or
a terminal device that is different from the first station or the second station and has a sensing capability.

4. The access point of claim 1, wherein the sensing procedure is a first sensing procedure for a sensing target, and the first sensing procedure is triggered based on at least one of the following metrics:
a sensing quality of a second sensing procedure between the access point and a third station for the sensing target, wherein the third station is the first station, the second station or a station other than the first station and the second station;
a sensing signal quality of the second sensing procedure; and
a location of the sensing target,
wherein for example a triggering condition of the first sensing procedure comprises at least one of the following:
the sensing signal quality being lower than a signal quality threshold;
a duration during which the sensing signal quality is lower than the signal quality threshold reaching an observation window duration;
communication between the access point and the third station that are associated with the second sensing procedure being non-line-of-sight (NLOS) communication;
a predefined sensing scenario or sensing area that are based on a sensing service; or
the sensing target arriving at a predetermined location.

5. The access point of claim 1, wherein the sensing performing request comprises at least one sensing configuration information of the following:
an indication of sensing role assignment between the first station and the second station;
sensing resource alignment information of the first station and the second station;
sampling frequency of a sensing signal of the sensing procedure;
sensing time information of the sensing procedure;
a format of the sensing signal of the sensing procedure; and
a format and a rule of a sensing performing feedback for the sensing performing request.

6. The access point of claim 1, wherein the access point is caused to determine the first station by:
selecting, among a station set associated with the access point, a first target station having a sensing capability and a direct link setup capability as the first station,
wherein for example the access point is caused to select the first target station by:
determining, among the station set, a station subset having the sensing capability and the direct link setup capability; and
determining, based on a location of a sensing target of the sensing procedure and history location information of stations in the station subset, the first target station from the station subset.

7. The access point according to any one of claims 1-6, wherein the access point is caused to determine the second station by the following:
transmitting, to the first station, a link query request for direct link information between the first station and at least one other station;
receiving, from the first station, a link query feedback for the link query request; and
selecting, based on the link query feedback and among a station set associated with the access point, a second target station as the second station,
wherein for example at least one of the following:
the link query request is for polling direct link information between the first station and a plurality of other stations; or
the link query feedback comprises the direct link information or indicates that no direct link information exists,
wherein for example the direct link information comprises at least one of the following:
a connection state of at least one direct link corresponding to the at least one other station; or
a channel state of the at least one direct link,
wherein for example the access point is caused to select the second target station by:
determining that the link query feedback comprises the direct link information; and
determining, based on the direct link information and a sensing criterion for a station, a station fulfilling the sensing criterion among the at least one other station as the second target station,
wherein for example the access point is caused to select the second target station by:
determining that the link query feedback indicates that no direct link information exists or the direct link information indicates that none of the at least one direct link corresponding to the at least one other station fulfills a sensing criterion for a station; and
selecting, among the station set, a station fulfilling the sensing criterion as the second target station,
wherein for example the sensing criterion comprises a sensing capability and a direct link setup capability, and at least one of the following:
sensing resolution;
power saving state information;
reference signal receiving power (RSRP); or
line-of-sight (LOS) communication with the access point.

8. The access point of claim 1, the access point is further caused to:
transmit, to the first station, a link setup request for indicating the first station to set up the direct link with the second station,
wherein for example the access point is further caused to
receive, from the first station, a link setup feedback for the link setup request, wherein the link setup feedback indicates that a setup of the direct link has been completed.

9. The access point of any of claims 2, 7 and 8, wherein
at least one of the sensing performing request, the link query request and the link setup request is transmitted via a message having a predefined format, and the predefined format comprises at least one of the following:
a message type field;
a bitmap field; or
a report information field; or
at least one of the sensing performing feedback, the link query feedback or the link setup feedback is received via a message having the predefined format,
wherein for example the message type field indicates one of the following:
the sensing performing request;
the link query request;
the link setup request;
the sensing performing feedback;
the link query feedback; or
the link setup feedback,
wherein for example:
the message type field indicates the sensing performing request, and the bitmap field indicates whether the sensing role assignment between the first station and the second station is indicated by the access point;
the message type field indicates the link query request, and the bitmap field indicates that all direct link information between the first station and other stations is polled, or indicates that direct link information between the first station and other stations corresponding to a specified first association identification (AID) is polled;
the message type field indicates the link setup request, and the bitmap field indicates that the first station sets up the direct link with the second station corresponding to a specified second AID;
the message type field indicates the sensing performing feedback, and the bitmap field indicates a content type of the sensing performing feedback;
the message type field indicates the link query feedback, and the bitmap field indicates the specified first AID or indicates that no direct link information exists; or
the message type field indicates the link setup feedback, and the bitmap field indicates whether setup of the direct link is successful,
wherein for example
the message type field indicates the sensing performing request, and the report information field comprises at least one sensing configuration information of the following : the sensing resource alignment information of the first station and the second station, the sampling frequency of the sensing signal of the sensing procedure, the sensing time information, the format of the sensing signal of the sensing procedure, or the format and the rule of the sensing performing feedback;
the message type field indicates the sensing performing feedback, and the report information field comprises content of the sensing performing feedback;
the message type field indicates the link query feedback, and the report information field comprises the direct link information; or
the message type field indicates the link setup feedback, and the report information field comprises an error report of setup failure of the direct link.

10. A first station (120), comprising
at least one processor; and
at least one memory storing instructions, the instructions when executed by the at least one processor causing the first station at least to:
receive (710), from an access point, a sensing performing request for performing a direct link-based sensing procedure, the direct link being between the first station and a second station; and
perform (720) the sensing procedure based on received sensing performing request.

11. The first station (120) of claim 10, wherein the first station is further caused to:
receive, from the access point, a link query request for direct link information between the first station and at least one other station; and
transmit, to the access point, a link query feedback for the link query request, wherein the link query feedback comprises the direct link information or indicates that no direct link information exists,
wherein for example the link query request is for polling direct link information between the first station and a plurality of other stations.

12. The first station (120) of claim 10, wherein a) the first station is further caused to:
receive, from the access point, a link setup request for indicating the first station to set up the direct link with the second station;
set up the direct link with the second station; and
transmit, to the access point, a link setup feedback for the link setup request, wherein the link setup feedback indicates that a setup of the direct link has been completed, and/or
wherein b) the sensing performing request comprises at least one of the following sensing configuration information:
an indication of sensing role assignment between the first station and the second station;
sensing resource alignment information of the first station and the second station;
sampling frequency of a sensing signal of the sensing procedure;
sensing time information;
a format of the sensing signal of the sensing procedure; and
a format and a rule of a sensing performing feedback for the sensing performing request, and/or,
wherein c) the first station is further caused to:
request information of a sensing capability and a direct link setup capability of the second station from the second station; and
determine, based on the information of the sensing capability and the direct link setup capability of the second station, sensing role assignment between the first station and the second station, and/or,
wherein d) the first station is further caused to:
transmit, to the second station, information of a sensing capability and a direct link setup capability of the first station; and
receive, from the second station, sensing role assignment determined by the second station, and/or,
wherein e) the first station is further caused to:
based on determining that the first station is a sensing receiver in the sensing procedure, transmit, to the access point, a sensing performing feedback for the sensing performing request,
wherein for example the sensing performing feedback comprises at least one of the following:
original sensing channel information between the first station and the second station; or
data after processing, by the first station, a sensing signal of the sensing procedure.

13. The first station (120) of any of claims 10-12, wherein the first station is further caused to:
transmit, to the second station, the sensing performing request after receiving the sensing performing request from the access point.

14. The first station (120) of any of claims 11, 12, wherein:
at least one of the sensing performing request, the link query request and the link setup request is received via a message having a predefined format, and the predefined format comprises at least one of the following:
a message type field;
a bitmap field; or
a report information field; or
at least one of the sensing performing feedback, the link query feedback or the link setup feedback is transmitted via a message having the predefined format,
wherein for example the message type field indicates one of:
the sensing performing request;
the link query request;
the link setup request;
the sensing performing feedback;
the link query feedback; or
the link setup feedback,
wherein for example
the message type field indicates the sensing performing request, and the bitmap field indicates whether the sensing role assignment between the first station and the second station is indicated by the access point;
the message type field indicates the link query request, and the bitmap field indicates that all direct link information between the first station and other stations is polled by the access point, or indicates that direct link information between the first station and other stations corresponding to a specified first association identification (AID) is polled by the access point;
the message type field indicates the link setup request, and the bitmap field indicates that the first station sets up the direct link with the second station corresponding to a specified second AID;
the message type field indicates the sensing performing feedback, and the bitmap field indicates a content type of the sensing performing feedback;
the message type field indicates the link query feedback, and the bitmap field indicates the specified first AID or indicates that no direct link information exists; or
the message type field indicates the link setup feedback, and the bitmap field indicates whether setup of the direct link is successful,
wherein for example
the message type field indicates the sensing performing request, and the report information field comprises at least one of the following sensing configuration information: the sensing resource alignment information of the first station and the second station, the sampling frequency of the sensing signal of the sensing procedure, the sensing time information, the format of the sensing signal of the sensing procedure, or the format and the rule of the sensing performing feedback;
the message type field indicates the sensing performing feedback, and the report information field comprises content of the sensing performing feedback;
the message type field indicates the link query feedback, and the report information field comprises the direct link information; or
the message type field indicates the link setup feedback, and the report information field comprises an error report of setup failure of the direct link.

15. A second station (130), comprising:
at least one processor; and
at least one memory storing instructions, the instructions when executed by the at least one processor causing the second station at least to:
receive, from an access point or a first station, a sensing performing request for performing a direct link-based sensing procedure, the direct link being between the first station and the second station; and
perform, based on received sensing performing request, the sensing procedure.

16. The second station (130) of claim 15, wherein a) the sensing performing request comprises at least one of the following sensing configuration information:
an indication of sensing role assignment between the first station and the second station;
sensing resource alignment information of the first station and the second station;
sampling frequency of a sensing signal of the sensing procedure;
sensing time information;
a format of the sensing signal of the sensing procedure; and
a format and a rule of a sensing performing feedback for the sensing performing request, and/or
wherein b) the second station is further caused to:
receive a request for information of a sensing capability and a direct link setup capability of the second station by the first station;
transmit, to the first station, the information of the sensing capability and the direct link setup capability of the second station; and
receive, from the first station, sensing role assignment between the first station and the second station determined by the first station, and/or
wherein c) the second station is further caused to:
receive, from the first station, information of a sensing capability and a direct link setup capability of the first station; and
determine, based on the information of the sensing capability and the direct link setup capability of the first station, sensing role assignment between the first station and the second station.

17. The second station (130) of any of claims 15-16, wherein the second station is further caused to:
based on determining that the second station is a sensing receiver in the sensing procedure, transmit, to the access point, a sensing performing feedback for the sensing performing request.

18. The second station (130) of claim 17, wherein a) the sensing performing feedback comprises at least one of the following:
original sensing channel information between the first station and the second station; and
data after processing, by the second station, sensing signal of the sensing procedure, and/or
wherein b) at least one of the following:
the sensing performing request is received via a message having a predefined format, and the predefined format comprises at least one of a message type field, a bitmap field and a report information field; or
the sensing performing feedback is transmitted via a message having a predefined format,
wherein for example the message type field indicates one of the sensing performing request and the sensing performing feedback,
wherein for example:
the message type field indicates the sensing performing request, and the bitmap field indicates whether the sensing role assignment between the first station and the second station is indicated by the access point; or
the message type field indicates the sensing performing feedback, and the bitmap field indicates a content type of the sensing performing feedback,
wherein for example:
the message type field indicates the sensing performing request, and the report information field comprises at least one of the following sensing configuration information: the sensing resource alignment information of the first station and the second station, the sampling frequency of the sensing signal of the sensing procedure, the sensing time information, the format of the sensing signal of the sensing procedure, or the format and the rule of the sensing performing feedback; or
the message type field indicates the sensing performing feedback, and the report information field comprises content of the sensing performing feedback.

19. A communication method, comprising:
determining (210), at an access point and based on determining that a direct link between stations based sensing procedure is triggered, a first station and a second station associated with the sensing procedure; and
transmitting (222), to at least one of the first station and the second station, a sensing performing request for performing the sensing procedure.

20. A communication method, comprising:
receiving, at a first station and from an access point, a sensing performing request for performing a direct link-based sensing procedure, the direct link being between the first station and a second station; and
performing the sensing procedure based on received sensing performing request.

21. A communication method, comprising:
receiving (810), at a second station (130) and from an access point (110) or a first station (120), a sensing performing request for performing a direct link-based sensing procedure, the direct link being between the first station and the second station; and
performing (820) the sensing procedure based on received sensing performing request.

22. A communication apparatus, comprising:
means for determining (210), at an access point and based on determining that a direct link between stations based sensing procedure is triggered, a first station and a second station associated with the sensing procedure; and
means for transmitting (222), to at least one of the first station and the second station, a sensing performing request for performing the sensing procedure.

23. A communication apparatus, comprising:
means for receiving, at a first station and from an access point, a sensing performing request for performing a direct link-based sensing procedure, the direct link being between the first station and a second station; and
means for performing the sensing procedure based on received sensing performing request.

24. A communication apparatus, comprising:
means for receiving, at a second station and from an access point or a first station, a sensing performing request for performing a direct link-based sensing procedure, the direct link being between the first station and the second station; and
means for performing the sensing procedure based on received sensing performing request.

25. A computer readable medium comprising instructions (930) stored thereon, which, when executed by at least one processing unit, cause the at least one processing unit to be configured to perform any of methods of claims 19-21.
